# EUROPEAN PATENT APPLICATION

(11) **EP 4 775 006 A1**
(43) Date of publication of application: **15.07.2026**
(21) Application number: 25217523.7
(22) Date of filing: 21.11.2025
(51) Int. Cl.: A01B 69/00, B60D 1/30

(54) **TRAILED IMPLEMENT WITH PROXIMITY SENSOR**

(30) Priority: 09.01.2025 US 202519015101
(71) Applicant: Deere & Company, Moline, IL 61265 (US)
(72) Inventor: JONES, AUSTIN J, 68163 Mannheim (DE)
(74) Representative: Stein, Stefan

(57) **Abstract**

A trailed implement includes a tongue coupled to an implement structure and configured for attachment to a rearward end of a tow vehicle. A proximity sensor is positioned to detect data related to objects located within a field of view disposed forward of the implement structure. A controller configured to identify a rear ground engaging element of the tow vehicle from data sensed by the proximity sensor, determine a location of the rear ground engaging element of the tow vehicle relative to the implement structure, and communicate a vehicle control and/or and operator warning signal when the rear ground engaging element is within a pre-defined distance of the implement structure.

## Description

### TECHNICAL FIELD

The disclosure generally relates to a trailed implement having a proximity sensor for detecting possible contact between an object and the trailed implement.

### BACKGROUND

A trailed implement may include a tongue that is attached to a rearward end of a tow vehicle. Often, the connection between the tongue and the tow vehicle enables pivotable movement about a vertical axis. During sharp steering maneuvers, it is possible for portions of the tow vehicle, e.g., the rear tires of the tow vehicle, to contact the trailed implement, potentially causing damage to the trailed implement and/or the tow vehicle. The possibility of contact between the tow vehicle and the trailed implement is increased with the use of dual rear tires on the two vehicle.

In some implementations, the trailed implement may further include a tongue that is configured to pivot about a vertical axis located at an intersection between the tongue and the implement structure. In such embodiments, the tongue may be pivotable about the pivot axis disposed at the intersection between the tongue and the tow vehicle, and also about the pivot axis disposed at the intersection of the tongue and the implement structure. Due to the increased maneuverability of such an implementation, the possibility of the tow vehicle contacting the trailed implement during steering maneuvers is increased.

### SUMMARY

A trailed implement is provided. The trailed implement includes an implement structure rotatably supporting an implement ground engaging element, and a tongue coupled to the implement structure and configured for attachment to a rearward end of a tow vehicle. A proximity sensor is positioned to detect data related to objects located within a field of view disposed forward of the implement structure. A controller includes a processor and a memory having a contact avoidance algorithm stored thereon. The processor is operable to execute the contact avoidance algorithm to identify a rear ground engaging element of the tow vehicle from data sensed by the proximity sensor, determine a location of the rear ground engaging element of the tow vehicle relative to the implement structure, and communicate a warning signal to a notification device for generating a communication indicating a possible contact between the rear ground engaging element of the tow vehicle and the implement structure when the rear ground engaging element is within a pre-defined distance of the implement structure.

In one implementation of the disclosure, the tongue may be moveably coupled to the implement structure for generally horizontal pivotal movement about a tongue pivot axis extending substantially vertically relative to the implement structure. A tongue actuator may interconnect the tongue and the implement structure for controlling an angular position of the tongue about the tongue pivot axis relative to the implement frame.

In one aspect of the disclosure, When the rear ground engaging element of the tow vehicle is within the pre-defined distance of the implement structure, the contact avoidance algorithm may be operable to communicate a tongue control signal to the tongue actuator to change the angular position of the tongue about the tongue pivot axis relative to the implement structure to avoid contact between the rear ground engaging element of the tow vehicle and the implement structure.

In one aspect of the disclosure, the proximity sensor may include, but is not limited to, one of a lidar sensor, a radar sensor, a stereo camera, an inductance sensor, an ultrasonic sensor, a magnetic sensor, or a photoelectric sensor.

In one aspect of the disclosure, when the rear ground engaging element of the tow vehicle is within the pre-defined distance of the implement structure, the control avoidance algorithm may be operable to communicate a vehicle control signal to the tow vehicle for controlling one of a steering system of the tow vehicle or a propulsion system of the tow vehicle in order to avoid contact between the rear ground engaging element of the tow vehicle and the implement structure.

In one aspect of the disclosure, the proximity sensor may be coupled to the implement structure. The proximity sensor may be positioned proximate a forward outer corner of the implement structure relative to a central longitudinal axis of the implement structure, and arranged such that the field of view of the proximity sensor includes a front edge of the implement structure and a rearward corner of the tow vehicle.

In one aspect of the disclosure, the notification device may include, but is not limited to, one of an audio speaker, an indicator light, a haptic device, or a visual display. The notification device may be located on the trailed implement, or on the associated tow vehicle.

In one aspect of the disclosure, the contact avoidance algorithm may be operable to identify an object other than the rear ground engaging element of the tow vehicle that is disposed between the tow vehicle and the implement structure. When the object other than the rear ground engaging element of the tow vehicle is identified and is within the pre-defined distance of the implement structure, the contact avoidance algorithm may be operable to communicate the warning signal to the notification device for generating the communication indicating a possible contact between the object and the implement structure, and/or communicate a tongue control signal to the tongue actuator to change the angular position of the tongue about the tongue pivot axis relative to the implement structure.

In one aspect of the disclosure, the trailed implement may be incorporated into a harvest system that includes the tow vehicle and the trailed implement. The tow vehicle may be operable to move across a field, and include a frame having a forward end and an opposing rearward end, and which rotatably supports the rear ground engaging element of the tow vehicle proximate the rearward end of the frame.

Accordingly, the harvest system and the trailed implement thereof may avoid contact between the implement structure and an object, such as but not limited to the rear ground engaging element of the tow vehicle during sharp steering maneuvers, by communicating the warning signal to the notification device so that an operator may take corrective action, and/or by communicating the tongue control signal to the tongue actuator to control adjust the angular position of the tongue relative to the implement structure to avoid contact.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

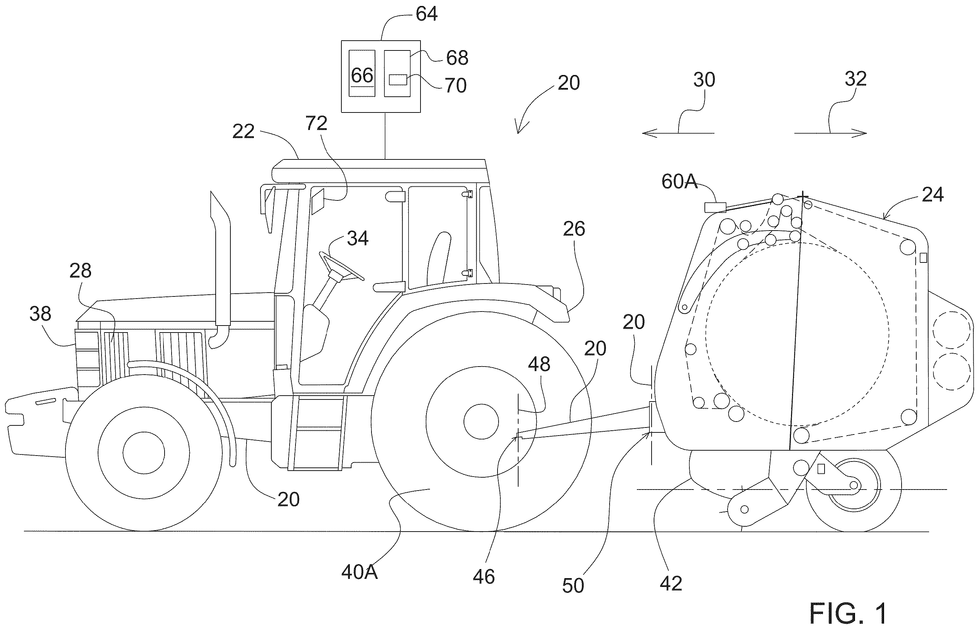

FIG. 1 is a schematic side view of a harvest system showing a tow vehicle and a trailed implement.

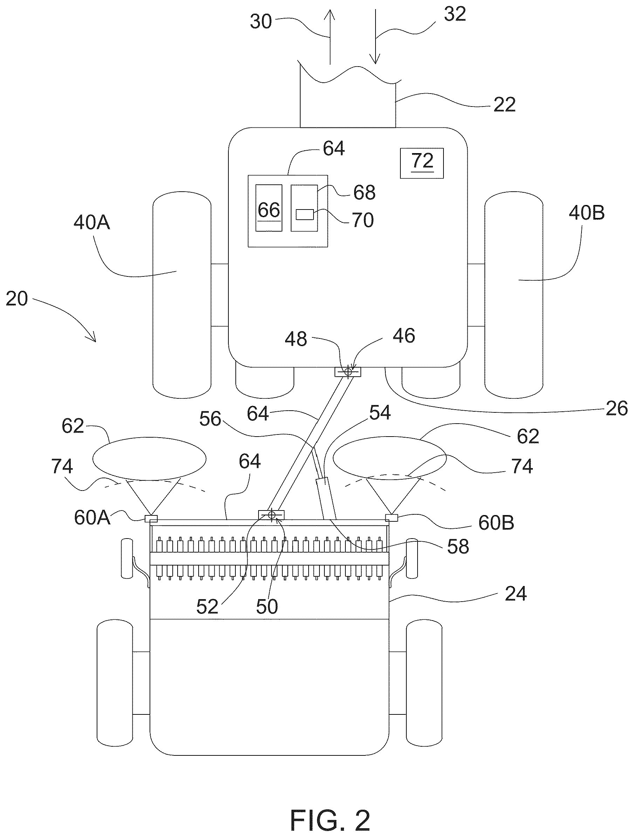

FIG. 2 is a schematic top view of the harvest system showing a pivotal connection between the tongue of the trailed implement and the implement structure of the trailed implement.

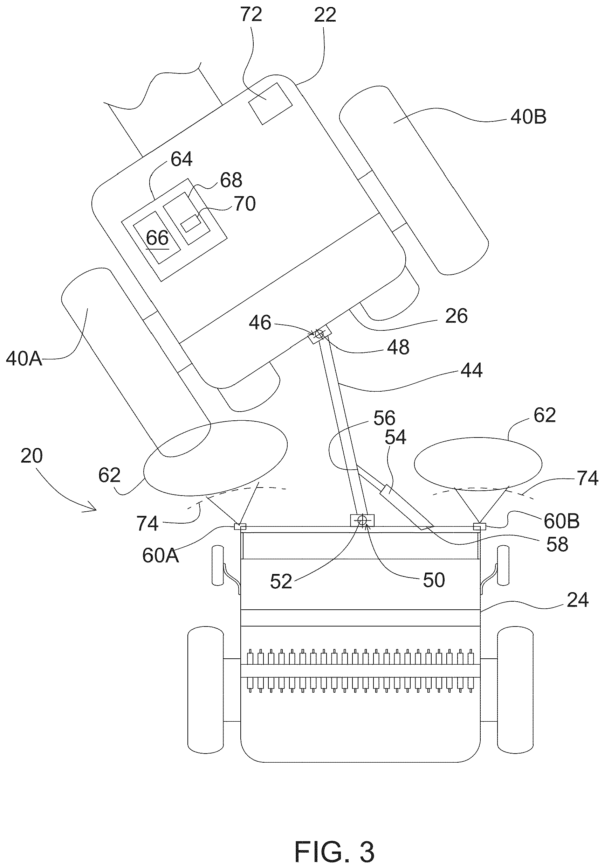

FIG. 3 is a schematic top view of the harvest system showing the tow vehicle executing a turning maneuver whereby a rear ground engaging element of the tow vehicle may potentially contact the trailed implement.

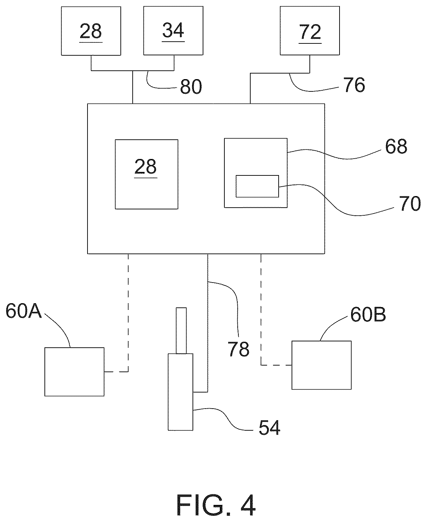

FIG. 4 is a schematic diagram showing communication/control between various components of the harvest system.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

Referring to the Figures, wherein like numerals indicate like parts throughout the several views, a harvest system 20 is generally shown at 20. The harvest system 20 includes a tow vehicle 22 and a trailed implement 24 coupled to a rearward end 26 of the tow vehicle 22. The tow vehicle 22 may include, but is not limited to, a moveable platform capable of pulling the trailed implement 24 through a field. In one example, the tow vehicle 22 may include, but is not limited to, an agricultural tractor. The trailed implement 24 may include an implement configured to be drawn behind the tow vehicle 22, such as to execute a ground preparation, planting, crop care, and/or harvest operation. In one example, such as shown in the Figures, the trailed implement 24 is configured as a round baler. However, it should be appreciated that the trailed implement 24 may be configured as some other form of drawn implement.

The tow vehicle 22 is operable to move across a field. The tow vehicle 22 may include a propulsion system 28 that is operable to propel the tow vehicle 22 in either a forward direction 30 or a reverse direction 32. The propulsion system 28 may include for example, but is not limited to, an engine operable to provide motive torque to a drivetrain, which in turn rotates one or more ground engaging elements to move the tow vehicle 22 relative to the ground surface. The particular features and operation of the propulsion system 28 are understood by those skilled in the art, and are therefore not described in greater detail herein. The tow vehicle 22 may further include a steering system 34 that is operable to control a steering direction of the tow vehicle 22, for example, steering left or right of a vehicle centerline. The steering system 34 may include for example, but is not limited to, a pair of steerable wheels or tracks, or a differential speed drive system. The particular features and operation of the steering system 34 are understood by those skilled in the art, and are therefore not described in greater detail herein.

The tow vehicle 22 includes a frame 36 having a forward end 38 and the opposing rearward end 26. The frame 36 of the tow vehicle 22 rotatably supports at least one ground engaging element, e.g., a rear ground engaging element 40A, 40B disposed proximate the rearward end 26 of the frame 36 of the tow vehicle 22. As is understood by those skilled in the art, the rear ground engaging element 40A, 40B may include a left side element 40A disposed on a left side of the tow vehicle 22, and a right side element 40B disposed on a right side of the tow vehicle 22. The rear ground engaging element 40A, 40B may include, but is not limited to, a tracked element or a wheeled element as is understood by those skilled in the art.

The trailed implement 24 includes an implement structure 42. The implement structure 42 may include a frame structure, as well as other body panels forming a housing or exterior of the trailed implement 24. The implement structure 42 rotatably supports an implement ground engaging element, such as but not limited to a track or wheel.

The trailed implement 24 includes a tongue 44 that is coupled to the implement structure 42 at one end, and which may be coupled to the rearward end 26 of the tow vehicle 22 at another end. The tongue 44 may be coupled to the rearward end 26 of the tow vehicle 22 via a vehicle connection 46. The vehicle connection 46 may include, but is not limited to, a 3-point connection, a drawbar connection, a ball and receiver hitch connection, a pintle hitch connection, or other similar connection. The vehicle connection 46 between the tongue 44 and the tow vehicle 22 may be configured to enable pivotable movement about a connection axis 48 extending substantially vertically relative to a ground surface. As such, the trailed implement 24 may pivot about the connection axis 48 as the tow vehicle 22 executes steering maneuvers. In doing so, an angular position between the tongue 44 and the tow vehicle 22 may change.

The tongue 44 is connected to the implement structure 42 at an implement connection 50. In some implementations, the implement connection 50 may be a solid/rigid connection. However, in other implementations, the implement connection 50 may include a pivotable connection in which the tongue 44 may further be configured to pivot about a tongue pivot axis 52 located at the implement connection 50 between the tongue 44 and the implement structure 42. The tongue 44 may be moveably coupled to the implement structure 42 for generally horizontal pivotal movement about the tongue pivot axis 52. The tongue pivot axis 52 extends substantially vertically relative to the ground surface and the implement structure 42. As such, the connection between the tongue 44 and the implement structure 42 may be moveable to change an angular position of the tongue 44 relative to the implement structure 42 to cause the implement structure 42 to track left or right relative to the tow vehicle 22.

The trailed implement 24 may further include a tongue actuator 54. The tongue actuator 54 may interconnect the tongue 44 and one of the tow vehicle 22 or the implement structure 42. For example, in one implementation, the tongue actuator 54 is coupled to the tongue 44 at a first end 56 of the tow actuator, and is coupled to the implement structure 42 at an opposing second end 58 of the tongue actuator 54. However, in other implementations, the tongue actuator 54 may be coupled to the tongue 44 at the first end 56 of the tongue actuator 54, and may be coupled to the rearward end 26 of the tow vehicle 22 at the second end 58 of the tongue actuator 54. The tongue actuator 54 may be selectively controlled for controlling an angular position of the tongue 44 about the tongue pivot axis 52 relative to the implement frame 36. For example, the tongue actuator 54 may include a linear actuator, e.g., a hydraulic cylinder, that may be selectively controlled to adjust a length of the tongue actuator 54, which controls the angular position of the tongue 44 relative to the implement structure 42. Changing a length of the tongue actuator 54 may thereby adjust the angular position of the tongue 44 relative to the implement structure 42, which in turn controls how the trailed implement 24 tracks behind the tow vehicle 22.

The harvest system 20 may further include a proximity sensor 60A, 60B that is positioned to detect data related to objects located within a field of view 62 disposed forward of the implement structure 42, and particularly between the rearward end 26 of the tow vehicle 22 and the forward edge of the trailed implement 24. It should be appreciated that the field of view 62 covers a three-dimensional volume of space disposed forward of the trailed implement 24, and may include portions of the tow vehicle 22. As such, the rear ground engaging elements 40A, 40B of the tow vehicle 22 may be disposed within the field of view 62 of the proximity sensor 60A, 60B. The field of view 62 should be established to cover a region of concern between the two vehicle 22 and the trailed implement 24, in which the tow vehicle 22 and the trailed implement 24 may contact each other during certain manuevers. The proximity sensor 60A, 60B may include, but is not limited to, one a lidar sensor, a radar sensor, a stereo camera, an inductance sensor, an ultrasonic sensor, a magnetic sensor, a photoelectric sensor, or some other device that may detect objects and/or data that may be used to identify objects forward of the trailed implement 24 and a distance thereto.

In one implementation, the proximity sensor 60A, 60B may be coupled to the implement structure 42 and may be positioned proximate a forward outer corner of the implement structure 42 relative to a central longitudinal axis of the implement structure 42. In another implementation, the proximity sensor 60A, 60B may be coupled to the tow vehicle 22 and may be positioned proximate a rearward outer corner of the tow vehicle 22 relative to a central longitudinal axis of the tow vehicle 22. It should be appreciated that the proximity sensor 60A, 60B may include a first proximity sensor 60A disposed on first side of the trailed implement 24 or the tow vehicle 22, e.g., a right side, and a second proximity sensor 60B disposed on a second side of the trailed implement 24 or the tow vehicle 22, e.g., a left side. It should be appreciated that the field of view 62 of the proximity sensors 60A, 60B may overlap with each other. In other implementations, the proximity sensor may be embodied as a single device.

The harvest system 20 may further include a controller 64. The controller 64 may be disposed in communication with the proximity sensor 60A, 60B, the tongue actuator 54, the propulsion system 28 of the tow vehicle 22, and/or the steering system 34 of the tow vehicle 22. The controller 64 is operable to receive data signals from the proximity sensor 60A, 60B, generate communication signals to a notification device 72, and/or communicate control signals to one or more of the tongue actuator 54, the propulsion system 28 of the tow vehicle 22, or the steering system 34 for the tow vehicle 22. While the controller 64 is generally described herein as a singular device, it should be appreciated that the controller 64 may include multiple devices linked together to share and/or communicate information therebetween. Furthermore, it should be appreciated that the controller 64 may be located on the trailed implement 24 or located remotely from the trailed implement 24, such as but not limited to in the tow vehicle 22.

The controller 64 may alternatively be referred to as a computing device, a computer, a control unit, a control module, a module, etc. The controller 64 includes a processor 66, a memory 68, and all software, hardware, algorithms, connections, sensors, etc., necessary to manage and control the operation of the harvest system 20. As such, a method may be embodied as a program or algorithm operable on the controller 64. It should be appreciated that the controller 64 may include any device capable of analyzing data from various sensors, comparing data, making decisions, and executing the required tasks.

As used herein, "controller 64" is intended to be used consistent with how the term is used by a person of skill in the art, and refers to a computing component with processing, memory, and communication capabilities, which is utilized to execute instructions (i.e., stored on the memory 68 or received via the communication capabilities) to control or communicate with one or more other components. In certain embodiments, the controller 64 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 64 may be in communication with other components on the harvest system 20, such as hydraulic components, electrical components, and operator inputs within an operator station of the tow vehicle 22. The controller 64 may be electrically connected to these other components wirelessly or via a wiring harness such that messages, commands, and electrical power may be transmitted between the controller 64 and the other components. Although the controller 64 is referenced in the singular, in alternative embodiments the configuration and functionality described herein can be split across multiple devices using techniques known to a person of ordinary skill in the art.

The controller 64 may be embodied as one or multiple digital computers or host machines each having one or more processors, read only memory (ROM), random access memory (RAM), electrically-programmable read only memory (EPROM), optical drives, magnetic drives, etc., a highspeed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 68 may include any non-transitory/tangible medium which participates in providing data or computer-readable instructions. The memory 68 may be non-volatile or volatile. Non-volatile media may include, for example, optical or magnetic disks and other persistent memory. Example volatile media may include dynamic random access memory (DRAM), which may constitute a main memory. Other examples of embodiments for memory include a floppy, flexible disk, or hard disk, magnetic tape or other magnetic medium, a CD-ROM, DVD, and/or any other optical medium, as well as other possible memory devices such as flash memory.

The controller 64 includes the tangible, non-transitory memory 68 on which are recorded computer-executable instructions, including a contact avoidance algorithm 70. The processor 66 of the controller 64 is configured for executing the contact avoidance algorithm 70. The contact avoidance algorithm 70 implements a method of identifying and potentially mitigating contact between the tow vehicle 22 and the trailed implement 24, particularly while executing a turning or steering maneuver, described in detail below.

The contact avoidance algorithm 70 includes the controller 64 identifying an object from the data sensed by the proximity sensor 60A, 60B. The data sensed by the proximity sensor 60A, 60B may include, but is not limited to, a stereo image and/or images from multiple perspectives enabling the controller 64 to generate a stereo image, lidar data enabling the controller 64 to identify the object using object detection and identification software, radar data enabling the controller 64 to identify the object using object detection and identification software, or some other form of data from which the controller 64 may identify the object. The object may include any object disposed forward of the trailed implement 24. In one example implementation, the object may be identified and/or classified as the rear ground engaging element 40A, 40B of the tow vehicle 22. However, it should be appreciated that the controller 64 may identify the object to include something other than the rear ground engaging element 40A, 40B of the tow vehicle 22, such as but not limited to a post, a rock, an animal, connecting elements of the tow vehicle 22 such as 3-point hitch arms, a tow arm, rear fenders, etc.

Once the controller 64 has identified the object, e.g., the rear ground engaging element 40A, 40B of the tow vehicle 22, the controller 64 may determine a location of the rear ground engaging element 40A, 40B of the tow vehicle 22 relative to the implement structure 42 from the data sensed by the proximity sensor 60A, 60B. For example, if the data includes a stereo image, the controller 64 may determine the distance to the object by analyzing the stereo image, if the data includes radar or lidar data, then the controller 64 may determine the distance to the object by analyzing the return signal from the radar or lidar data.

When the rear ground engaging element 40A, 40B is within a pre-defined distance 74 of the implement structure 42, the controller 64 may communicate a warning signal to the notification device 72. It should be appreciated that the pre-defined distance 74 may be measured in three-dimensional space. As such, the pre-defined distance is not limited to a distance measured on a particular plane, e.g., a horizontal plane, but may include a distance measured on some other plane. The notification device 72 may include, but is not limited to, one of an audio speaker, an indicator light, a haptic device, or a visual display. The warning signal is configured to cause the notification device 72 to generate a communication indicating a possible contact between the object, e.g., the rear ground engaging element 40A, 40B of the tow vehicle 22, and the implement structure 42. For example, when executing a sharp turning maneuver, particularly when driving in reverse, the rear ground engaging element 40A, 40B of the tow vehicle 22 may near the implement structure 42. The contact avoidance algorithm 70 is configured to identify when the object, e.g., the rear ground engaging element 40A, 40B of the tow vehicle 22 comes within the pre-defined distance 74 of the implement structure 42, and then generate and communicate the warning signal to the notification device 72. This may be particularly important with implementations in which the tongue 44 of the railed implement 24 is movably attached to the implement structure 42 due to the increased freedom of movement between the tow vehicle 22 and the trailed implement 24.

In implementations in which the tongue 44 of the trailed implement 24 is moveably attached to the implement structure 42 for pivotal movement about the tongue pivot axis 52, the contact avoidance algorithm 70 may be operable to communicate a tongue 44 control signal to the tongue actuator 54 to change the angular position of the tongue 44 about the tongue pivot axis 52 relative to the implement structure 42. It should be appreciated that the controller 64 may communicate the tongue 44 control signal when the object is identified as the rear ground engaging element 40A, 40B of the tow vehicle 22, or as an object other than the rear ground engaging element 40A, 40B of the tow vehicle 22. By controlling the tongue actuator 54, the angular position of the implement structure 42 relative to the tongue 44 may be changed in a manner causing the trailed implement 24 to track away from the object and avoid contact therewith. It should be appreciated that the tongue 44 control signal may be generated and communicated automatically in response to the object moving within the pre-defined distance 74 of the implement structure 42.

Additionally, when the object is within the pre-defined distance 74 of the implement structure 42, the control avoidance algorithm may be operable to communicate a vehicle control signal to the tow vehicle 22. The vehicle control signal may cause a change in operation of the tow vehicle 22, for example, by controlling one of the steering system 34 of the tow vehicle 22 or the propulsion system 28 of the tow vehicle 22. In one implementation, the vehicle control signal may cause the steering system 34 to change or alter a steering direction of the tow vehicle 22 to prevent or minimize contact between the object and the implement structure 42 of the trailed implement 24. In another implementation, the vehicle control signal may cause the propulsion system 28 to slow or stop the tow vehicle 22 to prevent or minimize contact between the object and the implement structure 42 of the trailed implement 24. It should be appreciated that the vehicle control signal may be generated and communicated automatically in response to the object moving within the pre-defined distance 74 of the implement structure 42. Additionally, it should be appreciated that the vehicle control signal may be generated and communicated when the object is identified as the rear ground engaging element 40A, 40B of the tow vehicle 22, or when the object is identified as something other than the rear ground engaging element 40A, 40B of the tow vehicle 22.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A trailed implement (24) comprising:
an implement structure (42) rotatably supporting an implement ground engaging element;
a tongue (44) coupled to the implement structure (42) and configured for attachment to a rearward end (26) of a tow vehicle (22);
a proximity sensor (60A, 60B) positioned to detect data related to objects located within a field of view (62) disposed forward of the implement structure (42);
a controller (64) including a processor (66) and a memory (68) having a contact avoidance algorithm (70) stored thereon, wherein the processor (66) is operable to execute the contact avoidance algorithm (70) to:
identify a rear ground engaging element (40A, 40B) of the tow vehicle (22) from data sensed by the proximity sensor (60A, 60B);
determine a location of the rear ground engaging element (40A, 40B) of the tow vehicle (22) relative to the implement structure (42);
communicate a warning signal to a notification device (72) for generating a communication indicating a possible contact between the rear ground engaging element (40A, 40B) of the tow vehicle (22) and the implement structure (42) when the rear ground engaging element (40A, 40B) is within a pre-defined distance (74) of the implement structure (42).

2. The trailed implement (24) set forth in clam 1, wherein the tongue (44) is moveably coupled to the implement structure (42) for generally horizontal pivotal movement about a tongue pivot axis (52) extending substantially vertically relative to the implement structure (42), and further comprising a tongue actuator (54) interconnecting the tongue (44) and the implement structure (42) for controlling an angular position of the tongue (44) about the tongue pivot axis (52) relative to the implement frame.

3. The trailed implement (24) set forth in claim 1 or 2, wherein the contact avoidance algorithm (70) is operable to communicate a tongue (44) control signal to the tongue actuator (54) to change the angular position of the tongue (44) about the tongue pivot axis (52) relative to the implement structure (42) when the rear ground engaging element (40A, 40B) of the tow vehicle (22) is within the pre-defined distance (74) of the implement structure (42).

4. The trailed implement (24) according to at least one of the preceding claims, wherein the proximity sensor (60A, 60B) includes one of a lidar sensor, a radar sensor, a stereo camera, an inductance sensor, an ultrasonic sensor, a magnetic sensor, or a photoelectric sensor.

5. The trailed implement (24) according to at least one of the preceding claims, wherein the control avoidance algorithm is operable to communicate a vehicle control signal to the tow vehicle (22) for controlling one of a steering system (34) of the tow vehicle (22) or a propulsion system (28) of the tow vehicle (22) when the rear ground engaging element (40A, 40B) of the tow vehicle (22) is within the pre-defined distance (74) of the implement structure (42).

6. The trailed implement (24) according to at least one of the preceding claims, wherein the proximity sensor (60A, 60B) is coupled to the implement structure (42).

7. The trailed implement (24) set forth in claim 6, wherein the proximity sensor (60A, 60B) is positioned proximate a forward outer corner of the implement structure (42) relative to a central longitudinal axis of the implement structure (42).

8. The trailed implement (24) according to at least one of the preceding claims, wherein the notification device (72) includes one of an audio speaker, an indicator light, a haptic device, or a visual display.

9. The trailed implement (24) according to at least one of the preceding claims, wherein the contact avoidance algorithm (70) is operable to identify an object other than the rear ground engaging element (40A, 40B) of the tow vehicle (22) that is disposed between the tow vehicle (22) and the implement structure (42).

10. The trailed implement (24) set forth in claim 9, wherein the contact avoidance algorithm (70) is operable to communicate a tongue (44) control signal to the tongue actuator (54) to change the angular position of the tongue (44) about the tongue pivot axis (52) relative to the implement structure (42) when the object other than the rear ground engaging element (40A, 40B) of the tow vehicle (22) is identified and the object is within the pre-defined distance (74) of the implement structure (42).

11. A harvest system comprising:
a tow vehicle operable to move across a field, the tow vehicle including a frame having a forward end and an opposing rearward end, and rotatably supporting a rear ground engaging element disposed proximate the rearward end of the frame;
a trailed implement, in particular according to one of the claims 1 to 10, including an implement structure rotatably supporting an implement ground engaging element, and a tongue coupled to the implement structure and connecting the implement structure to the rearward end of a tow vehicle;
a proximity sensor positioned to detect data related to objects located within a field of view disposed forward of the implement structure;
a controller including a processor and a memory having a contact avoidance algorithm stored thereon, wherein the processor is operable to execute the contact avoidance algorithm to:
identify the rear ground engaging element of the tow vehicle from data sensed by the proximity sensor;
determine a location of the rear ground engaging element of the tow vehicle relative to the implement structure;
communicate a warning signal to a notification device for generating a communication indicating a possible contact between the rear ground engaging element of the tow vehicle and the implement structure when the rear ground engaging element is within a pre-defined distance of the implement structure.

12. The harvest system set forth in clam 11, wherein the tongue is moveably coupled to the implement structure for generally horizontal pivotal movement about a tongue pivot axis extending substantially vertically relative to the implement structure, and further comprising a tongue actuator interconnecting the tongue and one of the tow vehicle or the implement structure for controlling an angular position of the tongue about the tongue pivot axis relative to the implement frame, and/or wherein the contact avoidance algorithm is operable to communicate a tongue control signal to the tongue actuator to change the angular position of the tongue about the tongue pivot axis relative to the implement structure when the rear ground engaging element of the tow vehicle is within the pre-defined distance of the implement structure.

13. The harvest system set forth in claim 11 or 12, wherein the proximity sensor includes one of a lidar sensor, a radar sensor, a stereo camera, an inductance sensor, an ultrasonic sensor, a magnetic sensor, or a photoelectric sensor, and/or wherein the control avoidance algorithm is operable to communicate a vehicle control signal to the tow vehicle for controlling one of a steering system of the tow vehicle or a propulsion system of the tow vehicle when the rear ground engaging element of the tow vehicle is within the pre-defined distance of the implement structure.

14. The harvest system according to at least one of the claims 11 to 13, wherein the proximity sensor is coupled to the implement structure, and/or wherein the proximity sensor is coupled to the tow vehicle.

15. The harvest system according to at least one of the claims 11 to 14, wherein the contact avoidance algorithm is operable to identify an object other than the rear ground engaging element of the tow vehicle that is disposed between the tow vehicle and the implement structure, and/or wherein the contact avoidance algorithm is operable to communicate a tongue control signal to the tongue actuator to change the angular position of the tongue about the tongue pivot axis relative to the implement structure when the object other than the rear ground engaging element of the tow vehicle is identified and the rear ground engaging element of the tow vehicle is within the pre-defined distance of the implement structure.
